# EUROPEAN PATENT SPECIFICATION

(11) **EP 1 060 530 B1**
(45) Date of publication and mention of the grant of the patent: **05.06.2002**
(21) Application number: 99904666.7
(22) Date of filing: 24.02.1999
(51) Int. Cl.: H01M 8/04

(54) **LIQUID FEED SOLID POLYMER FUEL CELL SYSTEM**
FESTPOLYMERBRENNSTOFFZELLENSYSTEM MIT FLÜSSIGER BRENNSTOFFZUFUHR
SYSTEME POUR PILE A COMBUSTIBLE A POLYMERE SOLIDE ALIMENTEE EN LIQUIDE

(30) Priority: 25.02.1998 DE 19807878
(43) Date of publication of application: 20.12.2000
(73) Proprietor: BALLARD POWER SYSTEMS INC., Burnaby, British Columbia V5J 5J9 (CA)
(72) Inventor: LAMM, Arnold, D-89275 Oberelchingen (DE); WIESHEU, Norbert, D-89312 Guenzburg (DE)
(74) Representative: Patentanwälte Ruff, Wilhelm, Beier, Dauster & Partner
(86) International application number: CA9900135
(87) International publication number: WO9944249

(56) References cited:
- EP-A- 0 859 421
- DE-A- 19 722 598
- US-A- 5 599 638
- PATENT ABSTRACTS OF JAPAN vol. 013, no. 038 (E-709), 27 January 1989 -& JP 63 236271 A (HITACHI LTD), 3 October 1988
- PATENT ABSTRACTS OF JAPAN vol. 005, no. 171 (E-080), 30 October 1981 -& JP 56 097972 A (HITACHI LTD), 7 August 1981
- PATENT ABSTRACTS OF JAPAN vol. 006, no. 081 (E-107), 19 May 1982 -& JP 57 019973 A (HITACHI LTD), 2 February 1982
- PATENT ABSTRACTS OF JAPAN vol. 007, no. 045 (E-160), 23 February 1983 -& JP 57 196479 A (NISSAN JIDOSHA KK), 2 December 1982
- PATENT ABSTRACTS OF JAPAN vol. 007, no. 094 (E-171), 20 April 1983 -& JP 58 016471 A (NISSAN JIDOSHA KK), 31 January 1983
- PATENT ABSTRACTS OF JAPAN vol. 013, no. 038 (E-709), 27 January 1989 -& JP 63 236270 A (HITACHI LTD), 3 October 1988

## Description

### Field Of The Invention

The invention relates to liquid feed solid polymer fuel cell systems. Particularly it relates to fuel circulation subsystems for such systems.

### Background Of The Invention

At present, with regards to generating power using liquid energy sources in solid polymer fuel cell systems (also known as proton exchange membrane or PEM fuel cells), much world-wide effort is directed at reforming liquid methanol using a reformer system in order to produce hydrogen gas. Therein, a mixture of water and methanol is vaporized and reacted in a reformer to produce oxygen, carbon dioxide, and carbon monoxide. The vaporization and reforming processes require significant energy input. This results in a loss in overall efficiency for the complete system. Additionally, further processing steps are necessary in order to purify the reformed product gas before it can be supplied to a solid polymer fuel cell system. Also, in the reforming process, more water is typically consumed in making hydrogen than is later produced in the fuel cell by the reaction of the hydrogen with oxidant. Thus, the product water from the fuel cell is generally insufficient to supply the needs of the reformer and therefore a supply of water is required along with a supply of fuel, in the fuel cell system.

An alternative to reforming a liquid fuel feedstock for use in a fuel cell is to employ a suitable liquid fuel that can be directly oxidized in a liquid feed fuel cell (i.e. without reforming). For instance, U.S. Patent No. 5,599,638 discloses a liquid feed fuel cell system incorporating a stack of individual fuel cells. The system employs a fuel circulation loop that comprises a heat exchanger for cooling the circulating fuel stream, a circulation tank in which the cooled exhaust fuel stream is mixed with a fresh supply of water and fuel from a fuel and water injection unit, a gas separator integrated into the circulation tank for separating out product carbon dioxide from the fuel stream, and a pump for circulating the fuel stream. The cathode exhaust from the fuel cell stack comprises oxygen and water vapor that is directed through a water recovery unit to separate water therefrom. The separated water is directed to the fuel and water injection unit.

### Summary Of The Invention

A liquid feed solid polymer fuel cell system includes at least one fuel cell and a subsystem for circulating a liquid fuel stream from an anode outlet to an anode inlet of the fuel cell. The subsystem preferably comprises a fuel circulation loop that connects the anode outlet to the anode inlet, a pump in the fuel circulation loop to circulate the liquid fuel stream, a gas separator in the fuel circulation loop to separate gas from the circulating liquid fuel stream, and a cooler in the fuel circulation loop for controlling the temperature of the liquid fuel stream. A cooler by-pass line is also used in the subsystem so that some or all of the circulating fuel stream can bypass the cooler. This can be advantageous in bringing the fuel cell system into an operating temperature range more quickly during start-up. After warming up, at least a portion of the circulating fuel stream may be directed through the cooler in order to keep the temperature in the desired operating temperature range. The cooler by-pass line is fluidly connected to a portion of the fuel circulation loop in parallel across the cooler. The subsystem comprises a valve for adjusting flow of the liquid fuel stream through the cooler by-pass line. The valve is operated so as to adjust flow through the cooler by-pass line in accordance with the temperature of the liquid fuel stream. For instance, the valve may be operated to increase flow through the cooler by-pass line when the temperature of the circulating liquid fuel stream is below a pre-determined temperature, and to decrease flow through the cooler by-pass line when the temperature of the circulating liquid fuel stream is at or above the pre-determined temperature.

The valve is preferably located at the connection of the cooler by-pass line and the fuel circulation loop downstream of said cooler. Further, the valve is preferably operative for adjusting the flow in the circulation loop through both the cooler and the cooler by-pass line. That is, the valve may be operated to simultaneously increase flow through the cooler by-pass line while decreasing flow through the cooler, or alternatively to simultaneously decrease flow through the cooler by-pass line while increasing flow through the cooler. A three-way valve, for example, can then control the fractions of the circulating fuel stream that are directed through the cooler and through the cooler by-pass line.

The temperature of the circulating fuel stream, measured for example near the anode inlet, may desirably be used to control the operation of the valve. Thus, the subsystem may comprise a temperature sensor for monitoring the temperature of the liquid fuel stream. A signal from the temperature sensor may then be used to control the operation of the valve.

The gas separator in the subsystem is preferably located downstream of the cooler in the circulation loop. Gases that are separated out from the circulating fuel stream may exit the gas separator through a gas separating line. The gas separating line may comprise a gas cooler and a liquid separator to condense water and fuel from the separated gases and return it to the circulating fuel stream. The remaining separated gases may then be directed so as to join the cathode exhaust from the fuel cell by fluidly connecting the gas separating line to a cathode outlet of the fuel cell.

The subsystem may optionally further comprise an ion exchanger in an ion exchanger by-pass line for purposes of purifying the circulating fuel stream. Since the fuel stream exiting the fuel cell stack is typically too warm to feed to an ion exchanger, the ion exchanger by-pass line is fluidly connected in parallel to a portion of the fuel circulation loop downstream of said cooler. In a preferred embodiment, where the valve is located at the connection of the cooler by-pass line and the fuel circulation loop downstream of the cooler, the ion exchanger by-pass line is preferably connected in parallel across the valve, downstream of the cooler. In this way, at least a portion of the liquid fuel stream coming from the anode outlet can be directed through the cooler and then through ion exchanger independent of the operation of the valve. Thus, a portion of the circulating fuel stream is purified to some extent regardless of valve operation. Flow through the ion exchanger by-pass line may be controlled, for example, by incorporating a one way valve and an adjustable valve in the ion exchanger by-pass line downstream of the ion exchanger. The one way valve may be used to prevent reverse flow through the by-pass line and the adjustable valve may be used to adjust the portion of the circulating fuel stream to be directed through the ion exchanger.

In a subsystem comprising an ion exchanger, the gas separator may be located downstream of the ion exchanger by-pass line. As mentioned above, water and fuel vapors separated out from the circulating liquid fuel stream by the gas separator may be condensed and collected in a liquid separator. This water and fuel may then conveniently be returned to the circulating fuel stream by fluidly connecting the liquid separator to the ion exchanger. Water may also be condensed and collected from the cathode exhaust gas of the fuel cell. This water may also be conveniently returned to the circulating fuel stream by directing it to the ion exchanger. This may be accomplished by connecting a cathode exhaust line to the cathode exhaust of the fuel cell in which the cathode exhaust line comprises a water separator that is fluidly connected to said ion exchanger.

### Brief Description of the Drawing

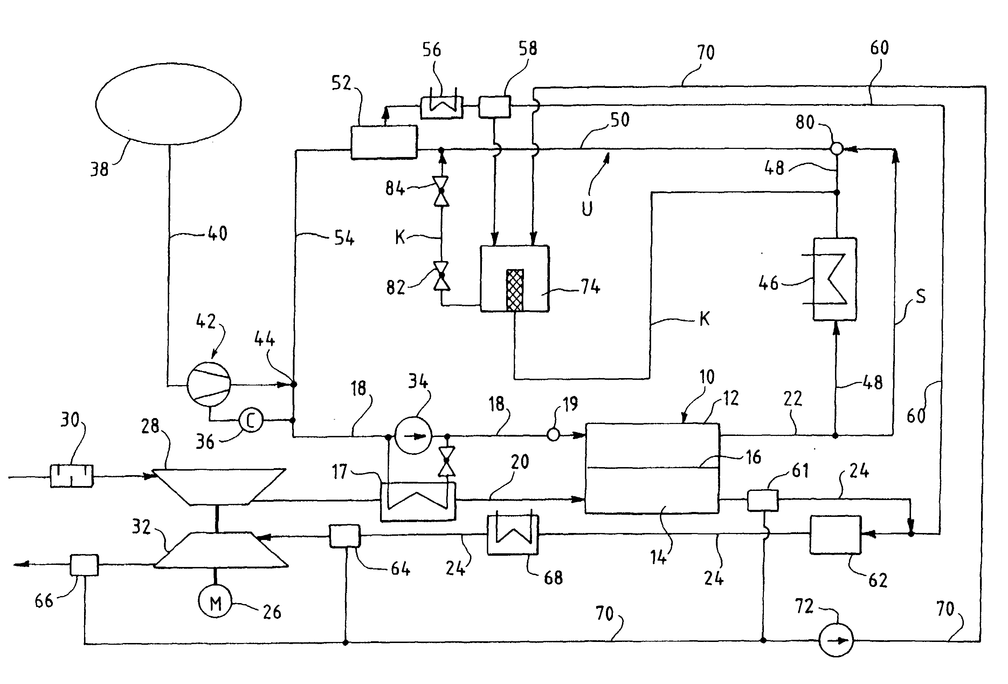

Figure 1 is a schematic diagram of a liquid feed solid polymer fuel cell system comprising a preferred fuel circulation subsystem.

### Detailed Description Of A Preferred Embodiment

Figure 1 is a schematic diagram of a preferred liquid feed solid polymer fuel cell system comprising a fuel cell 10 having anode chamber 12 and cathode chamber 14, separated by solid polymer proton conducting membrane 16. The anode chamber 12 is supplied with a liquid fuel mixture by anode supply line 18. The fuel may be any substance that can be directly oxidized in the fuel cell selected from the general structural formula H 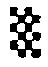 [CH₂O-]ₙ-Y where 1≤n≤5 and Y=H or Y=CH₃. In the following description, the liquid fuel mixture comprises methanol and water. While this represents a preferred embodiment, other fuels may be used and the liquid fuel mixture may optionally comprise other ionic or non-ionic additives (e.g. additives with favorable antifreeze properties or acid). Other possible fuels include branched variants of the preceding formula, such as, for example, dimethoxymethane or trimethoxymethane. Oxidant is supplied to cathode chamber 14 by cathode supply line 20. In the following description, ambient air is used as the oxidant.

In fuel cell 10, the fuel is oxidized at the anode, and the oxygen contained in the air is reduced at the cathode. These electrochemical reactions take place at suitable electrocatalysts adjacent opposite sides of the proton conducting membrane 16. Protons then migrate from the anode, through the proton conducting membrane 16, and react with oxygen at the cathode to form water. This electrochemical reaction generates a voltage between the two electrodes. By connecting many such fuel cells in series or parallel to form a stack, electrical power can be obtained that is sufficient, for example, for the propulsion of a vehicle.

The fuel stream exiting the fuel cell at the anode outlet contains carbon dioxide reaction product and unreacted water and methanol. This liquid/gas mixture is exhausted from anode chamber 12 by anode exhaust line 22. The cathode exhaust contains oxygen-depleted air and water vapor and is exhausted via cathode exhaust line 24. To obtain a high operating efficiency, the air oxidant is supplied at elevated pressure to cathode chamber 14. To compress the air oxidant, compressor 28, powered by electric motor 26, is located in cathode supply line 20. Compressor 28 takes in the desired air mass flow and compresses it to the desired pressure level. The compressed air may optionally be cooled using a colder fuel stream via heat exchanger 17 coupled to anode supply line 18. When using ambient air as the oxidant, preferably an air filter 30 is included near the inlet of cathode supply line 20, upstream of compressor 28. A portion of the energy needed for the compression of the air oxidant can be recovered with the help of expander 32, located in the cathode exhaust line 24. Preferably, compressor 28, expander 32, and electric motor 26 are installed on a common shaft. The power output of the fuel cell is adjusted by controlling the rotational speed of the compressor 28, and hence the mass flow of air delivered.

On the anode side, the water/methanol fuel stream mixture is circulated at a preset pressure by pump 34, to ensure a constant oversupply of fuel to the anode. The ratio of water to methanol in the circulating fuel stream is adjusted based on the methanol concentration as measured by sensor 36 located in anode supply line 18. Depending on the signal from sensor 36, a concentration adjustment is made to the circulating fuel stream water/methanol mixture. The concentration is adjusted by directing liquid methanol from methanol tank 38, through methanol feed line 40, and then injecting it into anode supply line 18 using an injection nozzle (not shown) at connection 44. Injection pump 42 is located in methanol feed line 40 to generate the pressure for injection. Thus, anode chamber 12 can be continually supplied with a fuel stream mixture having a constant or controlled methanol concentration.

The fuel cell system shown in Figure 1 comprises a preferred subsystem for circulating the liquid fuel stream from the anode outlet of the fuel cell to the anode inlet. The subsystem comprises fuel circulation loop U that directs the anode exhaust through anode exhaust line 22, cooler line 48, circulation lines 50 and 54, and anode supply line 18 to the anode inlet. The subsystem also comprises cooler by-pass line S that is fluidly connected in parallel across cooler 46. Preferably, the subsystem also comprises an ion exchanger 74 for purifying the circulating fuel stream. Ion exchanger 74 is located in ion exchanger by-pass line K that is fluidly connected in parallel to a portion of circulation loop U between cooler 46 and gas separator 52.

Gaseous carbon dioxide reaction product is separated from the circulating fuel stream by gas separator 52. The remaining liquid in the circulating fuel stream continues through circulation line 54 to anode supply line 18. The separated carbon dioxide gas is then directed to gas cooler 56 in order to condense out any entrained methanol and water vapor. The condensed methanol and water are collected in liquid separator 58 and are then directed back to ion exchanger 74 and thus back into the circulating fuel stream. The remaining carbon dioxide gas, having a low content of residual entrained water and methanol, is directed to cathode exhaust line 24 via gas separator line 60. There, it is mixed with the oxygen-containing cathode exhaust in cathode exhaust line 24. Any residual entrained methanol is then converted downstream to carbon dioxide and water vapor using exhaust catalyst 62.

To recover at least a portion of the water from the cathode exhaust of the fuel cell, water separators 61, 64, and 66 are located in the cathode exhaust line 24, near the cathode outlet and upstream and downstream of expander 32. Expander 32 thus serves as a compact condensing turbine, at the outlet of which a further portion of water vapor may be condensed out. Additionally, after exhaust catalyst 62, the cathode exhaust is cooled to a desired temperature using heat exchanger 68 that is controlled by a temperature sensor (not shown). The combination of temperature control and the condensing turbine (expander 32) allows for a net positive mass balance for water in the combined system (i.e. where overall, more water is generated and captured in the system than is consumed in the system). The water collected in water separators 61, 64, and 66 is subsequently directed back to ion exchanger 74 and hence back into the circulating fuel stream via return line 70 and using integrated return pump 72.

A cooler 46 for cooling the circulating fuel stream is provided in coolant line 48, downstream of the anode outlet. Coolant line 48 is connected to ion exchanger 74 downstream of cooler 46 (since the fuel stream exiting the fuel cell stack is typically too warm for an ion exchanger). Ion exchanger 74 serves to collect and purify: the circulating fuel stream arriving from the cooler 64, the condensed water and methanol arriving from liquid separator 58, and product water, originating from the cathode, arriving via return line 70. The outlet of ion exchanger 74 is connected to circulation line 50 upstream of gas separator 52. As depicted, this connection comprises a one way valve 82 and an adjustable valve 84.

During startup of the fuel cell system, a water/methanol fuel stream mixture is supplied to anode chamber 12 through anode supply line 18. The anode exhaust, comprising carbon dioxide gas and unreacted water and methanol, is directed to cooler line 48 and cooler by-pass line S via anode exhaust line 22. During startup, valve 80 is preferably set to direct most if not all of the anode exhaust through cooler by-pass line S. With the ion exchanger by-pass line K as depicted, even though valve 84 is open, almost all of the circulating fuel stream would flow through cooler by-pass line S, since cooler 46 presents a significantly larger flow resistance in cooler line 48.

The fuel stream is then directed via circulation line 50 to gas separator 52 in order to separate carbon dioxide gas from the circulating fuel stream as described above. The fuel stream is then directed to anode supply line 18 via circulation line 54. Fresh methanol is also injected, as required, into circulation line 54 by injection pump 42. The fuel stream temperature is measured by temperature sensor 19 near the inlet of anode chamber 12. As the fuel stream temperature increases, valve 80 is adjusted such that an increased fraction of the circulating fuel stream flows through cooler 46 and ion exchanger by-pass line K. When the fuel stream temperature near the inlet reaches a desired operating temperature, valve 80 is desirably adjusted to prevent flow through cooler by-pass line S and thus all the fuel stream is directed through cooler 46.

Adjustable valve 84 is set such that a certain portion (e.g. 10%) of the fuel stream flowing through cooler 46 is directed through ion exchanger 74. The remaining portion of the fuel stream flowing through cooler 46 is directed to gas separator 52 through valve 80 and circulation line 50.

While particular elements, embodiments and applications of the present invention have been shown and described, it will be understood, of course, that the invention is not limited thereto since modifications may be made by those skilled in the art without departing from the spirit and scope of the present disclosure, particularly in light of the foregoing teachings, insofar as such modifications are covered by the appending claims.

## Claims

1. A liquid feed solid polymer fuel cell system including at least one fuel cell and a subsystem for circulating a liquid fuel stream from an anode outlet to an anode inlet of said fuel cell, said subsystem comprising:
a fuel circulation loop connecting the anode outlet to the anode inlet;
a pump in said fuel circulation loop to circulate said liquid fuel stream;
a gas separator in said fuel circulation loop to separate gas from the circulating liquid fuel stream;
a cooler in said fuel circulation loop for controlling the temperature of said liquid fuel stream;
a cooler by-pass line fluidly connected to a portion of said fuel circulation loop in parallel across said cooler; and
a valve for adjusting flow of said liquid fuel stream through said cooler by-pass line.

2. The fuel cell system of Claim 1 wherein said valve is located at the connection of said cooler by-pass line and said fuel circulation loop downstream of said cooler.

3. The fuel cell system of Claim 2 wherein said valve is operative for adjusting the flow of said liquid fuel stream in said circulation loop through said cooler and said cooler by-pass line.

4. The fuel system of Claim 1 wherein said subsystem further comprises a temperature sensor for monitoring the temperature of said liquid fuel stream wherein a signal from said temperature sensor is used to control the operation of said valve.

5. The fuel system of Claim 1 wherein said subsystem further comprises an ion exchanger in an ion exchanger by-pass line wherein said ion exchanger by-pass line is fluidly connected in parallel to a portion of said fuel circulation loop downstream of said cooler or across said valve downstream of said cooler.

6. The fuel system of Claim 1 or 5 wherein said gas separator is located downstream of said cooler or said ion exchanger by-pass line.

7. The fuel system of Claim 5 wherein said subsystem further comprises a one way valve and an adjustable valve in said ion exchanger by-pass line downstream of said ion exchanger.

8. The fuel system of Claim 1 further comprising a gas separating line that fluidly connects said gas separator to a cathode outlet of said fuel cell.

9. The fuel system of Claim 8 wherein said gas separating line comprises a gas cooler and a liquid separator.

10. The fuel system of Claim 9 wherein said liquid separator is fluidly connected to an ion exchanger in an ion exchanger by-pass line that is fluidly connected in parallel to a portion of said fuel circulation loop.

11. The fuel cell system of Claim 5 further comprising a cathode exhaust line connected to the cathode exhaust of said fuel cell wherein said cathode exhaust line comprises a water separator that is fluidly connected to said ion exchanger.

12. A method of controlling the temperature of a liquid fuel stream circulating in a liquid feed solid polymer fuel cell system that includes at least one fuel cell and a fuel circulating subsystem, said subsystem comprising a fuel circulation loop for directing the liquid fuel stream from the anode outlet to the anode inlet, a pump in said fuel circulation loop for circulating the liquid fuel stream, a gas separator in said fuel circulation loop for separating gas from the circulating liquid fuel stream, a cooler in said fuel circulation loop, and a cooler by-pass line connected in parallel across said cooler, said method comprising:
directing said liquid fuel stream through said fuel circulation loop between said anode outlet and said anode inlet; and
adjusting the ratio of said liquid stream directed through said cooler to that directed through said cooler by-pass line in accordance with the temperature of said liquid fuel stream.

13. The method of Claim 12 wherein said method comprises:
operating a valve to increase flow through said cooler by-pass line when the temperature of the circulating liquid fuel stream is below a pre-determined temperature; and
operating said valve to decrease flow through said cooler by-pass line when the temperature of the circulating liquid fuel stream is at or above said pre-determined temperature.

14. The method of Claim 13 wherein said valve is located at the connection of said cooler by-pass line to said fuel circulation loop downstream of said cooler, and wherein operating said valve to increase flow through said cooler by-pass line decreases flow through said cooler, and operating said valve to decrease flow through said cooler by-pass line increases flow through said cooler.

15. The method of Claim 14 further comprising directing at least a portion of said liquid fuel stream from said anode outlet through an ion exchanger located in an ion exchanger by-pass line connected in parallel to a portion of said fuel circulation loop across said valve.

16. The method of Claim 15 further comprising directing at least a portion of said liquid fuel stream through said cooler and said ion exchanger by-pass line independent of the operation of said valve.

17. The method of Claim 15 further comprising:
collecting water and fuel from the gases separated out from said circulating liquid fuel stream by said gas separator; and
directing said collected water and fuel to said ion exchanger.

18. The method of Claim 15 further comprising:
collecting water from the cathode exhaust gas of said fuel cell; and
directing said collected water to said ion exchanger.

## Patentansprüche

1. Brennstoffzellensystem mit festem Polymer und für flüssigen Einsatzstoff, das wenigstens eine Brennstoffzelle und ein Teilsystem beinhaltet, um einen flüssigen Brennstoffstrom von einem Anodenauslass zu einem Anodeneinlass der Brennstoffzelle zu zirkulieren, wobei das Teilsystem beinhaltet:
eine Brennstoffzirkulationsschleife, die den Anodenauslass mit dem Anodeneinlass verbindet;
eine Pumpe in der Brennstoffzirkulationsschleife, um den flüssigen Brennstoffstrom zirkulieren zu lassen;
einen Gasseparator in der Brennstoffzirkulationsschleife, um Gas aus dem zirkulierenden flüssigen Brennstoffstrom zu separieren;
einen Kühler in der Brennstoffzirkulationsschleife, um die Temperatur des flüssigen Brennstoffstroms zu steuern;
eine Kühler-Bypassleitung, die mit einem Teil der Brennstoffzirkulationsschleife parallel zum Kühler fluidverbunden ist; und
ein Ventil zum Einstellen des Flusses des flüssigen Brennstoffstroms durch die Kühler-Bypassleitung.

2. Brennstoffzellensystem nach Anspruch 1, wobei sich das Ventil an der Verbindungsstelle der Kühler-Bypassleitung und der Brennstoffzirkulationsschleife stromabwärts des Kühlers befindet.

3. Brennstoffzellensystem nach Anspruch 2, wobei das Ventil dahingehend wirkt, den Fluss des flüssigen Brennstoffstroms in der Zirkulationsschleife durch den Kühler und die Kühler-Bypassleitung einzustellen.

4. Brennstoffzellensystem nach Anspruch 1, wobei das Teilsystem des Weiteren einen Temperatursensor beinhaltet, um die Temperatur des flüssigen Brennstoffstroms zu überwachen, wobei ein Signal von dem Temperatursensor verwendet wird, um den Betrieb des Ventils zu steuern.

5. Brennstoffzellensystem nach Anspruch 1, wobei das Teilsystem des Weiteren einen Ionenaustauscher in einer Ionenaustauscher-Bypassleitung beinhaltet, wobei die Ionenaustauscher-Bypassleitung parallel zu einem Teil der Brennstoffzirkulationsschleife stromabwärts des Kühlers oder über das Ventil hinweg stromabwärts des Kühlers fluidverbunden ist.

6. Brennstoffzellensystem nach Anspruch 1 oder 5, wobei sich der Gasseparator stromabwärts des Kühlers oder der Ionenaustauscher-Bypassleitung befindet.

7. Brennstoffzellensystem nach Anspruch 5, wobei das Teilsystem des Weiteren ein Einwegventil und ein einstellbares Ventil in der Ionenaustauscher-Bypassleitung stromabwärts des Ionenaustauschers beinhaltet.

8. Brennstoffzellensystem nach Anspruch 1, das des Weiteren eine Gasseparationsleitung beinhaltet, die den Gasseparator mit einem Kathodenauslass der Brennstoffzelle fluidverbindet.

9. Brennstoffzellensystem nach Anspruch 8, wobei die Gasseparationsleitung einen Gaskühler und einen Flüssigkeitsseparator beinhaltet.

10. Brennstoffzellensystem nach Anspruch 9, wobei der Flüssigkeitsseparator mit einem Ionenaustauscher in einer Ionenaustauscher-Bypassleitung fluidverbunden ist, die parallel zu einem Teil der Brennstoffzirkulationsschleife fluidverbunden ist.

11. Brennstoffzellensystem nach Anspruch 5, das des Weiteren eine Kathodenauslassleitung beinhaltet, die mit dem Kathodenauslass der Brennstoffzelle verbunden ist, wobei die Kathodenauslassleitung einen Wasserseparator beinhaltet, der mit dem Ionenaustauscher fluidverbunden ist.

12. Verfahren zur Steuerung der Temperatur eines flüssigen Brennstoffstroms, der in einem Brennstoffzellensystem mit festem Polymer für flüssigen Einsatzstoff zirkuliert, das wenigstens eine Brennstoffzelle und ein Brennstoffzirkulations-Teilsystem beinhaltet, wobei das Teilsystem eine Brennstoffzirkulationsschleife, um den flüssigen Brennstoffstrom von dem Anodenauslass zu dem Anodeneinlass zu leiten, eine Pumpe in der Brennstoffzirkulationsschleife, um den flüssigen Brennstoffstrom zirkulieren zu lassen, einen Gasseparator in der Brennstoffzirkulationsschleife, um Gas von dem zirkulierenden flüssigen Brennstoffstrom zu separieren, einen Kühler in der Brennstoffzirkulationsschleife sowie eine Kühler-Bypassleitung beinhaltet, die parallel zum Kühler geschaltet ist, wobei das Verfahren umfasst:
Führen des flüssigen Brennstoffstroms durch die Brennstoffzirkulationsschleife zwischen dem Anodenauslass und dem Anodeneinlass; und Einstellen des Verhältnisses des Flüssigkeitsstroms, der durch den Kühler geleitet wird, zu jenem der durch die Kühler-Bypassleitung geleitet wird, gemäß der Temperatur des flüssigen Brennstoffstroms.

13. Verfahren nach Anspruch 12, wobei das Verfahren umfasst:
Betätigen eines Ventils, um den Fluss durch die Kühler-Bypassleitung zu erhöhen, wenn die Temperatur des zirkulierenden flüssigen Brennstoffstroms unterhalb einer vorgegebenen Temperatur liegt; und
Betätigen des Ventils, um den Fluss durch die Kühler-Bypassleitung zu verringern, wenn die Temperatur des zirkulierenden flüssigen Brennstoffstroms bei oder oberhalb der vorgegebenen Temperatur liegt.

14. Verfahren nach Anspruch 13, wobei sich das Ventil an der Verbindungsstelle der Kühler-Bypassleitung mit der Brennstoffzirkulationsschleife stromabwärts des Kühlers befindet und wobei ein Betätigen des Ventils, um den Fluss durch die Kühler-Bypassleitung zu erhöhen, den Fluss durch den Kühler verringert, und ein Betätigen des Ventils, um den Fluss durch die Kühler-Bypassleitung zu verringern, den Fluss durch den Kühler erhöht.

15. Verfahren nach Anspruch 14, das des Weiteren ein Führen von wenigstens einem Teil des flüssigen Brennstoffstroms von dem Anodenauslass über einen Ionenaustauscher beinhaltet, der sich in einer Ionenaustauscher-Bypassleitung befindet, die parallel zu einem Teil der Brennstoffzirkulationsschleife über das Ventil hinweg geschaltet ist.

16. Verfahren nach Anspruch 15, das des Weiteren ein Führen von wenigstens einem Teil des flüssigen Brennstoffstroms durch den Kühler und die Ionenaustauscher-Bypassleitung hindurch unabhängig von der Betätigung des Ventils beinhaltet.

17. Verfahren nach Anspruch 15, das des Weiteren umfasst:
Sammeln von Wasser und Brennstoff aus den Gasen, die durch den Gasseparator aus dem flüssigen Brennstoffstrom separiert wurden; und
Führen des gesammelten Wassers und Brennstoffs zu dem Ionenaustauscher.

18. Verfahren nach Anspruch 15, das des Weiteren umfasst:
Sammeln von Wasser aus dem Kathodenauslassgas der Brennstoffzelle; und
Führen des gesammelten Wassers zu dem Ionenaustauscher.

## Revendications

1. Système de pile à combustible à polymère solide alimentée en liquide incluant au moins une pile à combustible et un sous-système pour faire circuler un courant de combustible liquide à partir d'une sortie d'anode vers une entrée d'anode de ladite pile à combustible, ledit sous-système comprenant :
- une boucle de circulation de combustible connectant la sortie d'anode à l'entrée d'anode ;
- une pompe dans ladite boucle de circulation de combustible pour faire circuler ledit courant de combustible liquide ;
- un séparateur de gaz dans ladite boucle de circulation de combustible pour séparer le gaz du courant de combustible liquide circulant ;
- un refroidisseur dans ladite boucle de circulation de combustible pour réguler la température dudit courant de combustible liquide ;
- une canalisation de dérivation du refroidisseur reliée de façon fluide à une partie de ladite boucle de circulation de combustible en parallèle à travers ledit refroidisseur ; et
- une vanne pour ajuster l'écoulement dudit courant de combustible liquide à travers ladite canalisation de dérivation du refroidisseur.

2. Système de pile à combustible selon la revendication 1, dans lequel ladite vanne est située à la connexion de ladite canalisation de dérivation du refroidisseur et ladite boucle de circulation de combustible en aval dudit refroidisseur.

3. Système de pile à combustible selon la revendication 2, dans lequel ladite vanne agit pour ajuster le débit dudit courant de combustible liquide dans ladite boucle de circulation à travers ledit refroidisseur et ladite canalisation de dérivation du refroidisseur.

4. Système de pile à combustible selon la revendication 1, dans lequel ledit sous-système comprend de plus un détecteur de température pour contrôler la température dudit courant de combustible liquide dans lequel un signal provenant dudit détecteur de température est utilisé pour commander l'action de ladite vanne.

5. Système de pile à combustible selon la revendication 1, dans lequel ledit sous-système comprend de plus un échangeur d'ions dans une canalisation de dérivation échangeuse d'ions dans laquelle ladite canalisation de dérivation échangeuse d'ions est connectée de façon fluide en parallèle à une partie de ladite boucle de circulation du combustible en aval dudit refroidisseur ou à travers ladite vanne en aval dudit refroidisseur.

6. Système de pile à combustible selon la revendication 1 ou 5, dans lequel ledit séparateur de gaz est situé en aval dudit refroidisseur ou de ladite canalisation de dérivation échangeuse d'ions.

7. Système de pile à combustible selon la revendication 5, dans lequel ledit sous-système comprend de plus une vanne à une voie et une vanne ajustable dans ladite canalisation de dérivation échangeuse d'ions en aval dudit échangeur d'ions.

8. Système de pile à combustible selon la revendication 1, comprenant de plus une canalisation de séparation de gaz qui connecte de façon fluide ledit séparateur de gaz à une sortie de cathode de ladite pile à combustible.

9. Système de pile à combustible selon la revendication 8, dans lequel ladite canalisation de séparation de gaz comprend un refroidisseur de gaz et un séparateur de liquide.

10. Système de pile à combustible selon la revendication 9, dans lequel ledit séparateur de liquide est connecté de façon fluide à un échangeur d'ions dans une canalisation de dérivation échangeuse d'ions qui est connectée de façon fluide en parallèle à une partie de ladite boucle de circulation de combustible.

11. Système de pile à combustible selon la revendication 5, comprenant de plus une canalisation d'échappement de cathode connectée à l'échappement de cathode de ladite pile à combustible dans laquelle ladite canalisation d'échappement de cathode comprend un séparateur d'eau qui est connecté de façon fluide audit échangeur d'ions.

12. Procédé pour réguler la température d'un courant de combustible liquide circulant dans un système de pile à combustible à polymère solide alimentée en liquide qui inclut au moins une cellule combustible et un sous-système faisant circuler le combustible, ledit sous-système comprenant une boucle de circulation de combustible pour diriger le courant de combustible liquide à partir de la sortie d'anode vers l'entrée d'anode, une pompe dans ladite boucle de circulation de combustible pour faire circuler le courant de combustible liquide, un séparateur de gaz dans ladite boucle de circulation de combustible pour séparer le gaz du courant de combustible liquide circulant, un refroidisseur dans ladite boucle de circulation de combustible, et une canalisation de dérivation du refroidisseur connectée en parallèle à travers ledit refroidisseur, ledit procédé comprend :
- l'action de diriger ledit courant de combustible liquide à travers ladite boucle de circulation du combustible entre ladite sortie d'anode et ladite entrée d'anode ; et
- l'ajustement du rapport dudit courant liquide dirigé à travers ledit refroidisseur vers celui dirigé à travers ladite canalisation de dérivation du refroidisseur conformément à la température dudit courant de combustible liquide.

13. Procédé selon la revendication 12, dans lequel ledit procédé comprend :
- l'action d'une vanne pour augmenter l'écoulement à travers ladite canalisation de dérivation du refroidisseur quand la température du courant de combustible liquide circulant est inférieure à une température pré-déterminée ; et
- l'action de ladite vanne pour diminuer l'écoulement à travers ladite canalisation de dérivation du refroidisseur quand la température du courant de combustible liquide circulant est à ladite température pré-déterminée ou au-dessus de celle-ci.

14. Procédé selon la revendication 13, dans lequel ladite vanne est située à la connexion de ladite canalisation de dérivation du refroidisseur à ladite boucle de circulation du combustible en aval dudit refroidisseur, et dans lequel l'action de ladite vanne pour augmenter l'écoulement à travers ladite canalisation de dérivation du refroidisseur diminue l'écoulement à travers ledit refroidisseur, et l'action de ladite vanne pour diminuer l'écoulement à travers la canalisation de dérivation du refroidisseur augmente l'écoulement à travers ledit refroidisseur.

15. Procédé selon la revendication 14, comprenant plus l'action de diriger au moins une partie dudit courant de combustible liquide à partir de ladite sortie d'anode à travers un échangeur d'ions situé dans une canalisation de dérivation échangeuse d'ions connectée en parallèle à une partie de ladite boucle de circulation du combustible à travers ladite vanne.

16. Procédé selon la revendication 15, comprenant plus l'action de diriger au moins une partie dudit courant de combustible liquide à travers ledit refroidisseur et ladite canalisation de dérivation échangeuse d'ions indépendante de l'action de ladite vanne.

17. Procédé selon la revendication 15 comprenant de plus
- la collecte de l'eau et du combustible des gaz séparés dudit courant de combustible liquide circulant par ledit séparateur de gaz ; et
- l'action de diriger ladite eau recueillie et ledit combustible vers ledit échangeur d'ions.

18. Procédé selon la revendication 15, comprenant de plus :
- la collecte de l'eau du gaz d'échappement de cathode de ladite pile à combustible ; et
- l'action de diriger ladite eau recueillie vers ledit échangeur d'ions.
